# EUROPEAN PATENT APPLICATION

(11) **EP 0 687 766 A1**
(43) Date of publication of application: **20.12.1995**
(21) Application number: 95109226.1
(22) Date of filing: 14.06.1995
(51) Int. Cl.: D21C 11/00

(54) **Method for the manufacture of cooking liquors by green liquor crystallization**

(30) Priority: 17.06.1994 FI 942902
(71) Applicant: A. AHLSTROM CORPORATION, FIN-29600 Noormarkku (FI)
(72) Inventor: Koskiniemi, Juha, FIN-48700 Kyminlinna (FI)
(74) Representative: Görg, Klaus, Dipl.-Ing.

(57) **Abstract**

The present invention relates to a method for manufacture of cooking liquors and like liquids with different sulphidities in the recovery processes of chemicals in a pulp mill. The chemicals recovered in the combustion of black liquor are dissolved, and the temperature of the thus obtained green liquor is decreased to crystallize the sodium carbonate; and the sodium carbonate crystals are separated from the green liquor to manufacture a green liquor with a high sulphidity, which may be utilized in the impregnation stage of the cooking and the sodium carbonate crystals are dissolved to manufacture an alkaline solution having a low sulphide content. The cooling crystallization of green liquor is carried out by expansion in two or more stages and vapor generated in the expansion is brought into contact with green liquor after the separation of sodium carbonate crystals to recover heat. The alkaline solution may be causticized to produce sodium hydroxide solution which may be used in different places in the pulp mill.

## Description

The present invention relates to a manufacture of different cooking liquors or like liquids required in the pulp mill by green liquor crystallization. The method is based on separation of sodium carbonate from green liquor.

In sulphate cooking wood is traditionally treated with white liquor containing sodium hydroxide and sodium sulphide. Lignin is dissolved and cellulose fibres are released. A mixture of cellulose fibres (pulp) and cooking chemicals is treated with water, whereby black liquor is generated. Black liquor containing dissolved lignin and cooking chemicals is evaporated and combusted to recover energy and chemicals. Black liquor may be treated by combusting in a conventional soda recovery boiler or in a gasifier or like. Depending on the combustion manner, chemicals are obtained in a molten or solid phase, which are dissolved so as to form so called green liquor containing sodium sulphide and sodium carbonate. Usually the green liquor is causticized with caustic lime (CaO) to white liquor containing sodium hydroxide and sodium sulphide.

Typically, the sulphidity of cooking liquor has been 30-40 % (sulphidity refers to the ratio of the amount of sodium sulphide to the total amount of sodium sulphide and sodium hydroxide). It is, however, known that by increasing the sulphidity of the white liquor, it is possible to produce pulp having a higher viscosity and better physical properties. It is also known that the sooner in the cooking the sulphidity of white liquor becomes high, the more clearly the advantages can be seen. Consequently, it is reasonable that cooking liquors with different sulphidities are available in the different stages of cooking. White liquor with high sulphur content is used at the beginning of cooking and liquor with low sulphur content is supplied to the later stages of cooking. In most extreme cases white liquor may contain only sodium hydroxide as an active substance.

Earlier, several technical and practical features have prevented the utilization of different white liquors in cellulose manufacture. The problem has been, for example, how to manufacture different white liquors in as energy saving manner as possible.

It is possible to use green liquor to produce green or white liquor with high sulphidity and liquid containing substantially only sodium hydroxide by crystallizing sodium carbonate out and causticizing it. Sodium hydroxide solution may be used in different parts of the pulp mill.

The crystallization of sodium carbonate in the green liquor could be realized in a conventional evaporation technique, in other words, by bringing heat evaporating water and raising thus the sodium carbonate content in the green liquor above the crystallization level. In this kind of evaporation the investment and operation costs must be optimized. If, for example, a multieffect evaporation plant is used, the amount of the effects decreases the amount of the primary steam required but adds, of course, the apparatus/equipment costs.

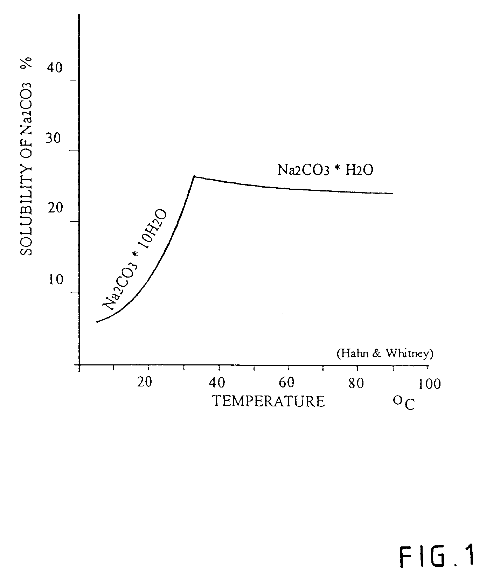

Conventional evaporation is well-grounded when the object is to increase concentration, for example, to improve the combustibility (black liquor). The purpose in the green liquor crystallization is, however, to separate sodium carbonate. Fig. 1 illustrates how sodium carbonate crystallizes at 5-20°C producing pure decahydrate crystals and at 35-90°C producing monohydrate crystals. (Hahn, S.T. and Whitney, R.P.; Tappi, Vol. 43 (1960), No. 5, p. 420.) The crystallization of sodium carbonate becomes easier at a low temperature (<20°C), because its solubility in green liquor is less than 10 weight-%. As for the energy economics of a pulp mill, it is significant that the temperatures of the final products are as high as possible. If crystallization were carried out directly as vacuum evaporation, the problem would be a low temperature level.

The purpose of the present invention is to provide a method for the manufacture of cooking liquors of at least two different sulphidities in an as energy saving manner as possible.

In accordance with the present invention, in a method for manufacture of cooking liquors with different sulphidities in the manufacture of pulp
- chemicals recovered in the combustion of black liquor are dissolved, and the temperature of the green liquor thus obtained is decreased to crystallize sodium carbonate;
- the sodium carbonate crystals are separated from the green liquor to obtain green liquor having a high sulphidity; and
- the sodium carbonate crystals are dissolved to obtain an alkaline solution having a low sulphide content;
   and it is essential of the invention that
- cooling crystallization of green liquor is carried out by expanding in at least two stages, and
- vapor generated by expanding is brought into contact with the green liquor to recover heat after the separation of sodium carbonate crystals.

Preferably, the green liquor is brought into direct contact with the expansion vapors, because thus the heat exchange is maybe most efficient.

Part of the vapor generated in the expansion may be advantageously used to heat the alkaline solution generated in the dissolution of sodium carbonate crystals. The heating is most preferably carried out indirectly because of the impurities of the expansion vapors, such as sulphur compounds.

Preferably, not all of the vapor generated in the expansion evaporation is used for heating green liquor, but vapor of the last stage(s) is utilized also in the dissolution of sodium carbonate crystals. When sodium carbonate crystals are formed in the expansion, heat is released, which again must be returned in the dissolution of crystals.

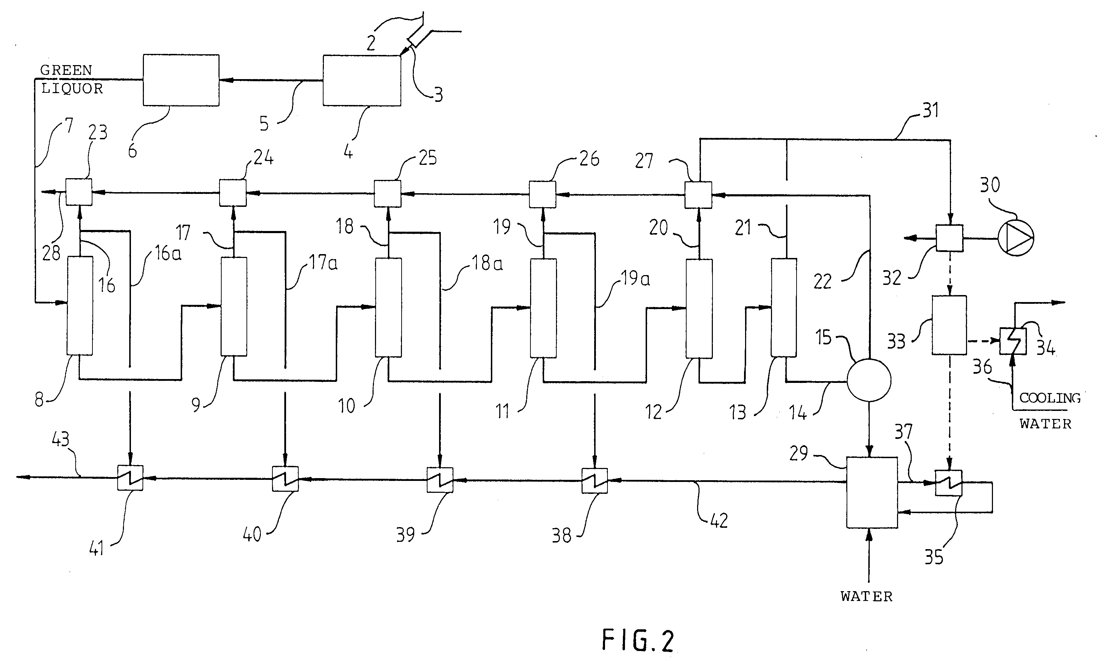

The present invention is described more in detail below, by way of example, with reference to the accompanying drawings, in which
Fig. 2 schematically illustrates a flow chart of a preferred embodiment of the method in accordance with the present invention.

Melt 3 is obtained from a soda recovery boiler 2, which melt 3 is dissolved in a dissolver 4 so as to form green liquor 5. Also any other corresponding treatment method for black liquor, such as gasification, to recover chemicals may be used instead of a conventional soda recovery boiler. The green liquor is clarified 6 by settling or filtering so as to remove the dregs. The clarified green liquor is brought along conduit 7 to the expansion evaporation. By utilizing the method in accordance with the invention it is possible to treat either the whole of the green liquor flow in a pulp mill or part of it, depending on what kind of cooking liquors are required. Part of the green liquor may be treated in a conventional way to produce a white liquor with a normal sulphidity.

Expansion evaporation is performed in several stages in flash tanks 8-13. Green liquor is brought to the flash tank 8, for example, at a temperature of about 90°C and is discharged from the last vessel 13 at a temperature of about 16°C. The temperature decreasing during the expansion, sodium carbonate is crystallized from the green liquor. The green liquor with the sodium carbonate crystals remaining from the last stage (vessel 13) is passed to a filter 15 through a conduit 14 for crystal separation. Vacuum for the expansion is brought about by a vacuum pump 30.

In the expansion vapor is discharged from the green liquor in each stage, and the vapor is passed to conduits 16-21. Most of the vapor in the first stages is brought into a direct contact with the green liquor obtained in the crystal separation, which is passed along line 22 from the filter 15 to direct heat exchangers 23-27. The temperature of the green liquor flowing in a line 28 is about 69°C. It has a high sulphidity, about 60-70% and it may be used in the impregnation stage of the cooking without causticizing. If so desired, it may, of course, be causticized.

The sodium carbonate crystals separated by the filter 15 are passed along the conduit 28 to a dissolver 29. Dissolution requires heat, which is obtained from the vapors 20, 21 of the last expansion stages.

The vapors are passed along line 31 to a heat pump system known per se (e.g. compressor, absorption, steam ejector), comprising parts 32-35. The broken line between these parts illustrates the heat transfer. Thus the heat of the vapor in line 31 transfers both to the cooling water 36 and to act as dissolving heat for crystals, when crystal solution 37 is circulated through a heat exchanger 35.

The alkaline solution 42 obtained from dissolver 29 and containing only a small amount of sulphide is heated in indirect heat exchangers 38-41 with expansion vapors 16a-19a. The alkali solution 43 at a temperature of 69°C may be causticized and the sodium hydroxide solution may be utilized in the later stages of pulp digestion, in oxygen delignification, bleaching and as alkaline washing liquid for gas scrubbers. In other words, the method in accordance with the present invention may be utilized in supplying the sodium hydroxide need of a pulp mill.

A method in accordance with the present invention may be utilized for the manufacture of different solutions for the need of a pulp mill in a very energy-economic way. If a compressor heat pump is used, it may be shown that the required electric power is less than 10% of the power required by a conventional 4-effect evaporation plant.

The present invention is not limited to the embodiments illustrated herein as examples, but different details may vary within the inventive concept defined by the patent claims. In some cases it may, for example, be better to use in some stages of the process a conventional evaporation by means of inexpensive waste heat or compressor heat pump evaporation to increase the sodium carbonate content and thus to improve crystallization.

Heat thus released may be utilized as well as expansion vapors.

## Claims

1. A method for manufacture of cooking liquors with different sulphidities in the manufacture of pulp, in which method
- chemicals recovered in the combustion of black liquor are dissolved, and the temperature of the green liquor thus obtained is decreased to crystallize sodium carbonate into crystals;
- the sodium carbonate crystals are separated from the green liquor to obtain green liquor with high sulphidity; and
- the sodium carbonate crystals are dissolved to obtain an alkaline solution having only a small amount of sulphide, **characterized** in that
- cooling crystallization of green liquor is carried out by expanding the green liquor in at least two stages, and
- the vapor generated by expanding is brought into contact with the green liquor after the separation of sodium carbonate crystals to recover heat.

2. A method in accordance with claim 1, **characterized** in that green liquor is brought in a direct contact with expansion vapor.

3. A method in accordance with claim 1 or 2, **characterized** in that a part of the expansion vapor is used for heating the alkaline solution.

4. A method in accordance with claim 1, 2 or 3, **characterized** in that expansion vapor from the last stage(s) is used for dissolving sodium carbonate crystals.
